# EUROPÄISCHE PATENTSCHRIFT

(11) **EP 2 509 775 B1**
(45) Veröffentlichungstag und Bekanntmachung des Hinweises auf die Patenterteilung: **20.04.2016**
(21) Anmeldenummer: 10794932.3
(22) Anmeldetag: 07.12.2010
(51) Int. Cl.: B29C 70/32, B29C 70/44, B29D 99/00, B29C 33/48

(54) **VORRICHTUNG UND VERFAHREN ZUR HERSTELLUNG EINER AUS EINEM FASERVERBUNDWERKSTOFF BESTEHENDEN RUMPFSCHALE FÜR EIN LUFTFAHRZEUG**
DEVICE AND METHOD FOR PRODUCING A FUSELAGE SHELL FORMED FROM COMPOSITE FIBRE MATERIAL FOR AN AIRCRAFT
DISPOSITIF ET PROCÉDÉ POUR FABRIQUER UNE COQUE DE FUSELAGE D'UN AÉRONEF DANS UN MATÉRIAU COMPOSITE RENFORCÉ PAR DES FIBRES

(30) Priorität: 07.12.2009 DE 102009056978; 07.12.2009 US 267222 P
(43) Veröffentlichungstag der Anmeldung: 17.10.2012
(73) Patentinhaber: Airbus Operations GmbH, 21129 Hamburg (DE); Premium AEROTEC GmbH, 86179 Augsburg (DE)
(72) Erfinder: BARLAG, Carsten, 26441 Jever (DE); STEIGER, Christian, 86438 Kissing (DE); DESCHAUER, Niels, 79100 Freiburg i.Br. (DE)
(74) Vertreter: Kopf Westenberger Wachenhausen Patentanwälte PartG mbB
(86) Internationale Anmeldenummer: PCT/EP2010/069052
(87) Internationale Veröffentlichungsnummer: WO 2011/070002

(56) Entgegenhaltungen:
- WO-A2-2007/148301
- WO-A2-2008/133748
- DE-A1-102007 060 029
- US-A1- 2006 108 058

## Beschreibung

### GEBIET DER ERFINDUNG

Die vorliegende Erfindung betrifft eine Vorrichtung sowie ein Verfahren zur Herstellung einer aus einem Faserverbundwerkstoff bestehenden Rumpfschale für ein Luftfahrzeug, die zur Verstärkung mit mehreren beabstandet zueinander angeordneten Stringern versehen ist, umfassend ein Grundgerüst zur Bildung eines tragfähigen biegesteifen Unterbaus mit nach außen gewölbter Montagefläche zum Positiv-Aufrüsten der herzustellenden Rumpfschale, wobei auf der Montagefläche mehrere sich nach Radialaußen erstreckende längs verstellbare Aktuatoren angebracht sind, die zur Montage über je zugeordnete Gelenke schwenkbar auf der Montagefläche des Grundgerüsts befestigt sind und an den distalen Enden der Aktuatoren Formrinnen zur Aufnahme der Stringer befestigt sind.

Das Einsatzgebiet der vorliegenden Erfindung erstreckt sich vornehmlich auf den Flugzeugbau. Insbesondere Verkehrs- oder Transportflugzeuge mit großvolumigen Rümpfen werden gewöhnlich in Schalenbauweise, insbesondere Halbschalenbauweise gefertigt. Unter Halbschalenbauweise wird im Flugzeugbau der Aufbau des Rumpfes in meist zwei Schalen verstanden. Zusammengefügt ergeben die beiden Schalen einen nahezu runden oder ovalen Querschnitt eines Rumpfabschnitts. Mehrere Rumpfabschnitte - für Heck, Rumpfmitte und Cockpitsektion hintereinander - ergeben den Flugzeugrumpf. Vermehrt kommen zur Herstellung von Flugzeugrümpfen Faserverbundwerkstoffe, wie glasfaser- oder kohlenfaserverstärkte Kunststoffe zum Einsatz. Um den Rumpf zu versteifen und die Lasten aufnehmen zu können, werden die Schalen üblicherweise mit Versteifungselementen ausgerüstet, z. B. T- oder Omega-Stringer.

Oftmals wird die Halbschale für den Flugzeugrumpf in einer Negativklebeform, Laminier-Klebe-Vorrichtung (LKV) hergestellt, indem dort Fasermaterial und Harz in verschiedenen Verfahren eingebracht und ausgehärtet wird. Dabei gibt die LKV dem Bauteil die entsprechende Außenkontur. Nach dem Entformen erfolgt oft eine spanende Nachbearbeitung, ehe ein Zusammenbau der so modellierten Halbschalen durchgeführt werden kann.

### HINTERGRUND DER ERFINDUNG

Aus der DE 103 31 358 A1 geht eine Vorrichtung für eine effizient serienmäßige Herstellung einer aus Faserverbundwerkstoffen bestehenden Rumpfschale für ein Luftfahrzeug hervor. Zur Erhöhung der Festigkeit der Rumpfschale ist diese mit in Abstand zueinander verlaufenden Stringern versehen. Auf einem ebenen Basisträger ist ein Raster von mehreren Stützwänden unterschiedlicher Länge derart befestigt, dass deren Enden ein Halbkreis bildet, wobei die besagten Stützwände unter durch den Radius des Halbkreises vorgegebenen Winkeln zum Basisträger angeordnet sind. An den den Halbkreis bildenden distalen Enden der Stützwände sind modulare Profile befestigt, welche die Zwischenräume zwischen den Stützwänden abdecken und deren äußere Oberflächen der Innenkontur des herzustellenden integralen Strukturbauteils im Negativ entsprechen. Das Raster der Stützwände sowie die Teilung der modularen Profile sind dabei derart ausgebildet, dass der Fügespalt der modularen Profile jeweils unter der Position eines Stringers angeordnet ist. Eine passende LKV wird nach Erstellung des kompletten Aufbaus des Bauteils und der Hilfsstoffe oberhalb dieses Montageträgers passgenau aufgelegt und die zuvor auf die Vakuumfolie aufgebrachte umlaufende Siegelmasse so vorverdichtet, dass eine vakuumdichte Versiegelung zwischen der Vakuumhaut und der LKV entsteht. Anschließend wird der Aufbau LKV-seitig evakuiert.

Die mit den Stringern versehene Rumpfschale wird mit der zuvor beschriebenen Vorrichtung hergestellt, in dem zunächst die äußeren Oberflächen der modularen Profile mit einer lose aufliegenden Folie abgedeckt werden. Anschließend wird der durch die Zwischenräume zwischen den Profilen gebildete Hohlraum evakuiert, so dass die Folie angesaugt wird und formtreu in die Profilnuten und Vertiefungen eingezogen wird. Danach können Hilfsstoffe auf die tiefgezogene Vakuumhaut/folie abgelegt werden. In den von der Vakuumhaut/folie bedeckten Profilnuten werden anschließend in Stützelementen bzw. Formstücke eingebettete Stringerprofile eingelegt.

Die Positionierung des Stringers erfolgt über die zueinander passende Geometrie von Mulde und Formstück. Auf von der Vakuumhaut/folie bedeckten äußeren Oberflächen der modularen Profile des Montageträgers und die Stringerprofile werden je nach Fertigungsverfahren alle Hautschichten aus Faserverbundwerkstoffen einzeln oder als Paket aufgelegt. Anschließend wird auf die Vakuumfolie eine Siegelmasse in optimierter Menge aufgetragen. Durch passgenaues Zusammenfahren des so vorbereiteten Aufbaus mit der LKV wird die umlaufende Siegelmasse derart verdichtet, dass eine vakuumdichte Siegelung zwischen der besagten Vakuumhaut/folie und der Laminierklebevorrichtung entsteht. Um den Transfer des kompletten Aufbaus von der Aufrüstvorrichtung (ARV) in die LKV zu vollziehen, wird die Seite einer zusätzlichen ARV belüftet und anschließend LKV-seitig Vakuum gezogen. Dadurch wird der gesamte Aufbau mit Atmosphärendruck gegen die LKV gedrückt. Schließlich werden ARV und LKV auseinandergefahren und die LKV gedreht, um diese dann einem Härtungsprozess zuzuführen.

Die Herstellungslösung ist bei recht starken Öffnungswinkeln großer Rumpfschalen recht problematisch. Denn durch die starken Öffnungswinkel können die Hilfsstoffe und die Stringerfussflächen beim Einfahren in eine Laminier-Klebe-Vorrichtung mit der darin befindlichen klebenassen Haut an den äußeren Stellen reiben, so dass die Formfläche geringfügig kleiner ausgelegt werden muss. Damit nun die Stringer und die Hilfsstoffe bei der Übergabe innerhalb der Laminier-Klebe-Vorrichtung nicht unkontrolliert den erforderlichen Spalt überbrücken, in dem diese mit der umschlagenden Vakuumfolie einfach mitgenommen werden, ist ein definiertes Heranführen der Stringer und der Hilfsstoffe notwendig.

Je nach Ausführung der Versteifungselemente in Längsrichtung (Stringer), welche z. B. die sogenannte Omega-Stringer (Hutprofil) oder T-Stringer sein kann, tritt ein Hinterschnitt auf, welcher das Auseinanderfahren von ARV und LKV unmöglich macht. Bei Omega-Stringern ist es abhängig von den Winkeln des Profils und dem Öffnungswinkel der Schale. Beim T-Stringer tritt der Hinterschnitt praktisch sofort auf, wenn die Geometrie der Kavität genau der des Stringers entspricht. Nun können die Kavitäten zur Aufnahme der Stringer so freigeschnitten werden, dass ein Auseinanderfahren von ARV und LKV gewährleistet ist. Bei großen Öffnungswinkeln tritt dann jedoch ein weiteres Problem auf, die Fixierung der Hilfsstoffe. Sie werden üblicherweise auf dem freien Bereich zwischen den Stringerkavitäten aufgelegt und fixiert. Wir die Stringerkavität nun stark freigeschnitten, bleibt kaum noch Platz für eine saubere Positionierung der Hilfsstoffe. Weiterhin wird die äußere Geometrie des Stützelementes bzw. des Formstücks vom Hinterschnittwinkel bestimmt, d.h. die den Stringer umgebenden Formstücke werden so groß, dass sie die komplette Haut bedecken, also bis zum nächsten Stringerprofil reichen. Dies ist fertigungstechnisch problematisch.

Ferner geht aus der WO 2007/148301 A2 eine Vorrichtung sowie ein Verfahren zur Herstellung einer aus einem Faserverbundwerkstoff bestehenden Rumpfabschnitts hervor. Die Vorrichtung umfasst einen Dorn, der aus einer Mehrzahl von Dornsektoren zusammengesetzt ist und auf einer Trägerstruktur montiert ist. Jeder Domsektor ist mit einer Antriebseinrichtung zum Verfahren der Dornsektoren ausgestattet. Eine erste ausgefahrene Position ermöglicht die Bildung einer durchgehenden Fläche zur Herstellung des Rumpfabschnitts und eine zweite eingefahrene Position ermöglicht das Lösen des Rumpfabschnitts von dem Dorn nach dem Härten.

Des Weiteren geht aus der US 2006/0108058 A1 eine Vorrichtung sowie ein Verfahren zur Herstellung einer Rumpfschale für ein Luftfahrzeug. Die Rumpfschale ist zur Verstärkung mit mehreren beabstandet zueinander angeordneten Stringern versehen. Die Vorrichtung umfasst ein Grundgerüst mit einer nach außen gewölbten Montagefläche zum Aufrüsten der herzustellenden Rumpfschale. Zwischen der Rumpfschale und dem Gerüst sind mehrere verstellbare Aktuatoren angebracht.

Weiterhin offenbart die WO 2008/133748 A2 ein Verfahren zur Herstellung eines einteiligen Verbundstoff-Rumpfabschnitts. Dazu wird eine Verbundstofflagenanordnung um einen Dorn herum gelegt und die Temperatur und der Druck innerhalb eines Volumens, das die Verbundstofflagenanordnung umgibt, werden erhöht. Der Temperaturanstieg veranlasst, dass sich der Umfang des Doms erweitert und eine oder mehrere Lagen der Verbundstofflagenanordnung dehnt. Ferner weist der Dorn eine Vielzahl von Längsnuten auf, die in Winkelabständen um seine äußere Umfangsfläche herum beabstandet sind, wobei jede Nut im Querschnitt ein konturiertes Profil hat. Des Weiteren ist der Dorn aus Verbundmaterial hergestellt, das Verstärkungsfasern aufweist, die im Wesentlichen in Längsrichtung ausgerichtet sind. Das Material folgt dabei den Konturen der Nuten.

Die Aufgabe der vorliegenden Erfindung besteht darin, eine Vorrichtung und ein hierzu korrespondierendes Verfahren zur Herstellung einer aus Faserverbundwerkstoffen bestehenden Rumpfschale für ein Luftfahrzeug zu schaffen, welche/s sich für eine effiziente, reproduzierbare Serienfertigung eignet und eine zuverlässige und einfache Herstellung von stark gekrümmten Rumpfschalen gestattet.

### ZUSAMMENFASSUNG DER ERFINDUNG

Die Aufgabe wird ausgehend von einer Vorrichtung gemäß dem Oberbegriff von Anspruch 1 oder Anspruch 2 in Verbindung mit den jeweiligen kennzeichnenden Merkmalen gelöst. Verfahrenstechnisch wird die Aufgabe durch Anspruch 6 gelöst. Die jeweils rückbezogenen Ansprüche 3 bis 5 und 7 bis 9 geben vorteilhafte Weiterbildungen der Erfindung wieder.

Gemäß einen ersten Alternative der Erfindug sind die einzelnen Formrinnen untereinander entlang ihrer Längskanten mit einem elastischen Band als biegsames Zwischenelement zur Bildung einer vakuumdicht geschlossenen Formfläche verbunden, wobei jeder Aktuator an seinem distalen Ende jeweils eine Formrinne aufweist.

Gemäß einer zweiten Alternative der Erfindung sind mehrere benachbarte, starr miteinander verbundene Formrinnen entlang ihrer Längskanten mit einem Scharnier als Zwischenelement zur Bildung einer vakuumdicht geschlossenen Formfläche an dem Grundgerüst angelenkt, wobei mehrere miteinander starr verbundene Formrinnen über einen gemeinsamen Aktuator verstellbar sind, wobei der Aktuator zum Abklappen einer hierüber schwenkbaren Seitenflanke der Formfläche vorgesehen ist.

Der Vorteil der erfindungsgemäßen Lösung liegt insbesondere darin, dass die Positionierung der Stringer, die Ablage der Hilfsstoffe sowie das Aufbringen der Vakuumfolie nun nicht mehr auf dem Bauteil selber, sondern auf einer separaten Aufrüstvorrichtung durchführbar ist. Hierdurch muss die eigentliche Laminier-Klebe-Vorrichtung nicht für die Zeitdauer des Aufrüstens belegt werden, da der Übergabeprozess des Stringer und des Vakuumaufbaus nur einen vergleichsweise geringem Fertigungszeitanteil ausmachen. Alle Fertigungsschritte, nämlich Aufrüsten und Ablegen der zu fertigenden Halbschale in die Laminier-Klebe-Vorrichtung können parallel laufen. Die Positionierung der Stringer erfolgt durch einfaches Einlegen in die vorbereiteten Mulden der erfindungsgemäßen Vorrichtung, in denen der Stringer dann sauber geführt wird. Die Vakuumfolie braucht nicht wie bisher in starken Falten gelegt werden, sondern diese wird entweder in die vorbereiteten Mulden der Formfläche tiefgezogen oder entsprechend vordrapiert und dann mit Vakuum beaufschlagt. Durch die längsverstellbaren Aktuatoren und damit bewirkte Veränderung der Formfläche können insbesondere Rumpfschalen mit starken Öffnungswinkeln unter Zuhilfenahme der Aufrüstvorrichtung hergestellt werden. Somit behindern die bei Rumpfschalen mit starken Öffnungswinkeln vorhandenen starken Hinterschnitte nicht mehr eine Entformung und es kann trotzdem dank der erfindungsgemäß verstellbaren Formfläche exakt positioniert werden. Formstücke können bei einem schon ausgehärteten Stringer sogar teilweise oder vollständig entfallen. Beim sogenannten Co-curing-Verfahren ist die äußere Geometrie der formgebenden Stützelemente nicht mehr vom Hinterschnittwinkel abhängig und können so stark vereinfacht werden. Zusätzlich ermöglicht es die erfindungsgemäß Lösung, eine gewöhnlich bei Vakuumaufbauten vorhandene Dichtnaht an die Laminier-Klebe-Vorrichtung zu pressen. Das Verstellen der Aktuatoren könnte erforderlichenfalls auch unterschiedlich stark durchgeführt werden, da an den Seitenflanken gewöhnlich ein größerer Offset-Spalt nötig ist als im Bereich der Mitte der Rumpfschale. Die Anpresskraft der Stringer auf das Bauteil bei dem Transferprozess kann genau eingestellt werden, so dass eine Überpressung ausgeschlossen werden kann. Eine Überpressung wäre beispielsweise bei großen, sehr schweren Vorrichtungen durch ungewolltes Durchbiegen der ARV möglich. Dann würde eine große Last auf dem Stringer liegen, was zu Schädigungen führen könnte.

Mit anderen Worten besteht die erfindungsgemäße Aufrüstvorrichtung aus einem tragenden Grundgerüst, beispielsweise einem Stahlrohr, Rahmen und einer gewölbten Formfläche, die aus den Formrinnen besteht, welche aus Kunststoff oder Metall gefertigt sein können. Die Formrinnen sind des Weiteren durch die Aktuatoren, beispielsweise Pneumatikzylinder, verstellbar am Grundgerüst montiert. Je nach Anforderungen der herzustellenden Rumpfschale können auch mehrere Formrinnen zusammengefasst über einen einzigen Aktuator betätigt werden.

Gemäß einer die Erfindung verbessernden Maßnahme wird vorgeschlagen, dass die Aktuatoren über je zugeordnete Gelenke schwenkbar auf der Montagefläche des Grundgerüsts montiert sind. Hierdurch lässt sich der Aktuator samt endseitig hieran angebrachter Formrinne entsprechend der geplanten Sollposition einfach montieren und ggf. nachjustieren. Im normalen Betrieb bleibt die eingestellte Position allerdings unveränderbar. Dies kann durch Blockieren des Gelenks unter Zuhilfenahme von Klemmmitteln oder dergleichen erfolgen oder durch entsprechende Langlöcher bei der Montage erreicht werden.

Gemäß eines anderen, die Erfindung verbessernden Zusatzaspekt wird vorgeschlagen, die einzelnen Formrinnen untereinander entlang der Längskanten mit einem elastischen Band als biegsames Zwischenelement luftdicht zu verbinden. Hierdurch kann in einfacher Weise die erforderliche Flexibilität der erfindungsgemäßen Vorrichtung in Radialrichtung erzeugt werden.

Alternativ hierzu ist es jedoch auch denkbar, das biegsame Zwischenelement als eine Art Scharnier auszubilden, wobei der Aktuator zum Abklappen einer hierüber schwenkbaren Seitenflanke der Formfläche vorgesehen ist. Für stark gekrümmte Rumpfschalen müsste ein solches Scharnier vorzugsweise elastisch ausgelegt sein, beispielsweise als Gummigussmasse. Über den Aktuator lassen sich vorzugsweise mehrere längs aneinandergereiht starr verbundene Formrinnen durch den Aktuator nach innen abklappen. Eine Nachjustierung der Stringerlage könnte hierbei mit auswechselbaren Anschlagplättchen in verschiedenen Dicken im verengten Muldenbereich der Formrinne erfolgen.

Gemäß einer anderen die Erfindung verbessernden Maßnahme wird vorgeschlagen, dass der Nutgrund der Formrinne mit Vakuumanschlüssen für die Formfläche versehen ist. Die Formfläche ist vakuumdicht ausgelegt und durch die Vakuumanschlüsse sowie hiermit in Verbindung stehender Verteilersystem können je nach Bedarf Bohrungen oder Nute/Kanäle zur Vakuumführung erzeugt werden.

Gemäß einer weiteren, die Erfindung verbessernden Maßnahme wird vorgeschlagen, dass der Kavitätbereich der Formrinne mehrere beabstandet zueinander angeordnete kavitätquerschnittsverringernde und der Solllage des einzulegenden Stringers entsprechende Positionierabschnitte aufweist. An der Stelle der Positionierabschnitte verkleinert sich also der Querschnitt der Formrinne vorzugsweise um einige Millimeter bis auf Soll-Außenabmaße des hieran einzulegenden Stringers. An dieser Stelle wird der Stringer dann in einfacher Weise geführt und genau positioniert. Zusätzlich können im Bereich der Positionierabschnitte auch vorzugsweise rückseitig Magnete zur Fixierung der Stringer oder dergleichen angebracht werden.

Um die ARV und die LKV zusammenfahren zu können, muss entweder die LKV oder die ARV gedreht werden. Dazu kann die Aufrüstvorrichtung auf einem Verschiebewagen mit Hubmechanismus unter die gewendete LKV gefahren werden. In der zweiten Lösung kann die ARV in einer Hub-Wende-Station montiert werden, um die so gedrehte ARV mit der dauerstehenden LKV zusammenzufahren. Die Positionierung von ARV und Laminier-Klebe-Vorrichtung kann z. B. durch Führungshülsen und -zapfen gewährleistet werden. Nach Zusammenführen der mit den Bauelementen der herzustellenden Rumpfschale belegten Aufrüstvorrichtung in die Laminier-Klebe-Vorrichtung kann der anschließende Fügeprozess/Aushärteprozess durchgeführt werden, welcher in an sich bekannter Weise aus dem allgemeinen Stand der Technik hervorgeht.

Zur Herstellung einer Rumpfschale für ein Luftfahrzeug mit einer vorstehend beschriebenen Vorrichtung werden die nachfolgenden Verfahrensschritte vorgeschlagen:
a) Ausfahren der Aktuatoren zur Bildung einer der Ausgangslage entsprechenden Formfläche in Übergabestellung,
b) Aufziehen und Abdichten einer Vakuumfolie auf die Formfläche mit einem Vakuum,
c) Aufkleben vorkonfektionierter Hilfsstoffbahnen in die Bereiche zwischen Kavitäten/Mulden benachbarter Formrinnen,
d) Einlegen von Stringern in die Formrinnen, so dass diese parallel zu den Hilfsstoffbahnen verlaufen,
e) Einfahren der Aktuatoren zur Bildung einer Einfahrstellung zum beabstandeten Positionieren der belegten Formfläche unterhalb oder oberhalb einer zugeordneten Laminier-Klebe-Vorrichtung,
f) Ausfahren der Aktuatoren in die Übergabestellung zum Anpressen der belegten Formfläche an eine korrespondierend hierzu geformten Gegenfläche der Laminier-Klebe-Vorrichtung,
g) Lösen des Vakuums seitens der Formfläche und Starten eines Vakuums seitens der Laminier-Klebe-Vorrichtung zum Übergeben des zuvor auf der Formfläche aufgebrachten Aufbaus,
h) Einfahren der Aktuatoren in die Einfahrstellung zum Auseinanderfahren von ARV und LKV.

Zusätzlich wird vorgeschlagen, im Rahmen eines dem Einlegen der Stringer folgenden zusätzlichen Zwischenschritts mit Dichtmitteln versehene Endstück in die Enden der Kavitäten/Mulden der Formrinnen einzulegen. Hierdurch wird in einfacher Weise an dieser Stelle eine durchlaufende Mulde aufgefüllt. Somit wird stirnseitig wieder eine glatte Oberfläche für die Anbindung des Dichtbandes an die Laminier-Klebe-Vorrichtungsoberfläche geschaffen.

Nachdem der Vakuumaufbau für die Rumpfschale in der erfindungsgemäßen Weise vorbereitet worden ist, können die Aushärtung und damit die Verklebung von Außenhaut und Stringern im Autoklaven erfolgen.

Nachdem der Vakuumaufbau für die Rumpfschale in der erfindungsgemäßen Weise vorbereitet worden ist, können die Aushärtung und damit die Verklebung von Haut und Stringern im Autoklaven erfolgen. Nach der Aushärtung werden die Hilfsstoffe und die Vakuumfolie entfernt und die Rumpfschale aus der Laminier-Klebe-Vorrichtung entnommen und sollte vorzugsweise unmittelbar anschließend gegebenenfalls einer mech. Bearbeitung und Qualitätsprüfung zugeführt werden. Anschließend kann die Montage zum fertigen Rumpf durchgeführt werden.

### KURZE BESCHREIBUNG DER ZEICHNUNGEN

Weitere die Erfindung verbessernde Maßnahmen werden nachstehend gemeinsam mit der Beschreibung bevorzugter Ausführungsbeispiele der Erfindung anhand der Figuren näher dargestellt. Es zeigt:
- Figur 1: eine schematische Frontansicht einer Aufrüstvorrichtung zur Herstellung von Rumpfschalen gemäß einer ersten Ausführungsform,
- Figur 2: eine schematische Frontansicht einer Aufrüstvorrichtung zur Herstellung von Rumpfschalen gemäß einer zweiten Ausführungsform,
- Figur 3: eine perspektivische Darstellung einer exemplarischen Formrinne mit integrierten Positioniermitteln, und
- Figuren 4a-4h: eine schematische Figurensequenz zur Veranschaulichung des mit der Vorrichtung vorzugsweise durchzuführenden Herstellungsverfahrens.

### DETAILLIERTE BESCHREIBUNG VON AUSFÜHRUNGSFORMEN

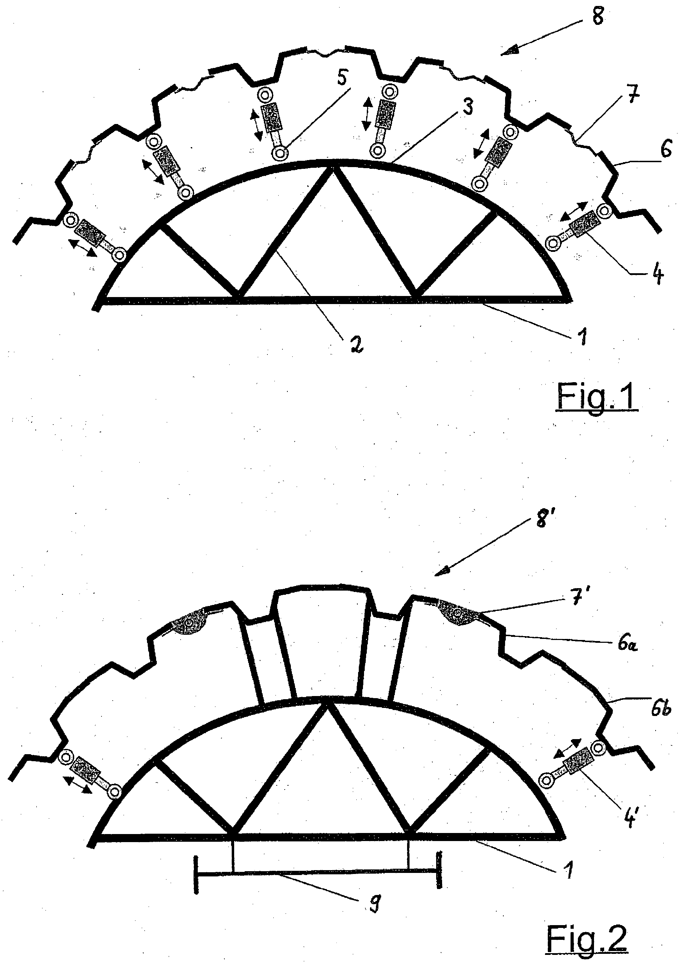

Gemäß Figur 1 besteht eine Aufrüstvorrichtung im Wesentlichen aus einem Grundgerüst 1 zur Bildung einer gewölbten Montagefläche 3 und zur Herstellung einer biegesteifen Unterkonstruktion. Auf der Montagefläche 3 sind mehrere sich nach radial außen erstreckende Aktuatoren 4 angebracht. Die Aktuatoren 4 sind seitens der Montagefläche 3 über Gelenke/Langlöcher 5 schwenkbar montiert und weisen jeweils an ihrem distalen Ende Formrinnen 6 zur Aufnahme - nicht weiter dargestellter - Stringer der Rumpfschale auf. Die einzelnen Formrinnen 6 sind untereinander mit biegsamen/elastischen Zwischenelementen 7 derart verbunden, dass sich insgesamt eine vakuumdicht geschlossene Formfläche 8 bildet.

Die biegsamen Zwischenelemente 7 sind diesem Ausführungsbeispiel als elastische Bänder ausgeführt.

In dem in der Figur 2 dargestellten Ausführungsbeispiel sind mehrere benachbarte Formrinnen 6a, 6b starr miteinander verbunden und über ein als Scharnier ausgebildetes biegsames Zwischenelement 7' an dem Grundgerüst 1 angelenkt.

Die starr miteinander verbundenen Formrinnen 6a und 6b sind über einen gemeinsamen Aktuator 4' in dem durch das biegsame Zwischenelement 7' erzeugten Gelenk schwenkbar, so dass die beiden einander gegenüberliegenden Seitenteile dieser Aufrüstvorrichtung in Richtung Grundgerüst 1 abklappbar sind.

Das Grundgerüst 1 ist hier auf einem Verschiebewagen 9 mit Hubmechanismus montiert, um die gesamte Vorrichtung zu Positionierung gegenüber einer darüber angeordneten - nicht weiter dargestellten - Laminier-Klebe-Vorrichtung auszurichten.

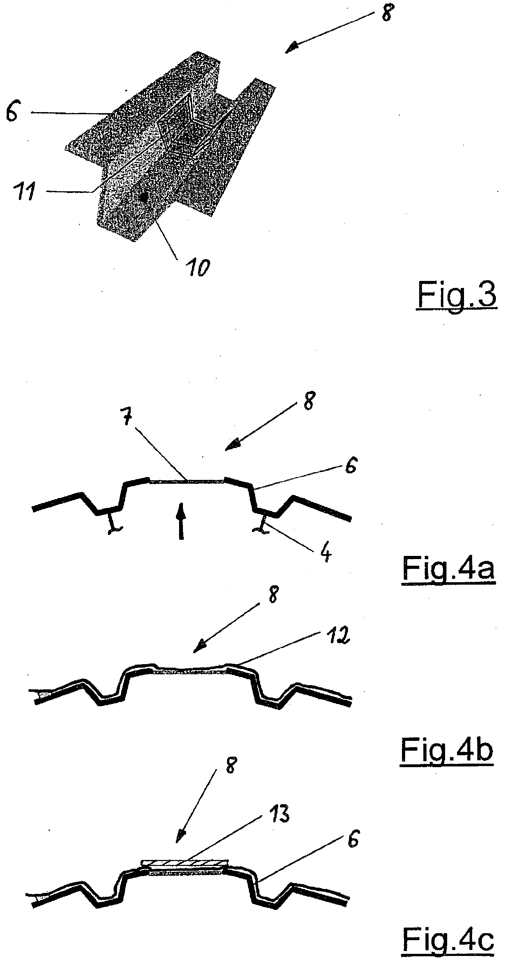

Gemäß Figur 3 ist die hier aus einem Metall bestehende Formrinne 6 der Vorrichtung mit Vakuumanschlüssen 10 versehen, über welche die Formfläche 8 evakuierbar ist. Der Nutbereich der Formrinne 6 weist des Weiteren einen den Nutquerschnitt verringernden Positionierabschnitt 11 auf, an welchen während der Herstellung ein Stringer zur Anlage kommt, um diese exakt innerhalb der Vorrichtung auszurichten.

In der Sequenz der nachfolgenden Figuren 4a bis 4h werden die Herstellungsschritte für eine Rumpfschale unter Zugrundelegung der vorstehend in Figur 1 beschriebenen Vorrichtung illustriert:

Nach Figur 4a wird eine Übergabestellung der Vorrichtung eingenommen, in dem die Aktuatoren 4 in Pfeilrichtung ausgefahren werden. Es ergibt sich hierdurch eine der Sollposition entsprechende gewölbte Formfläche 8, bei welcher die zwischen dem einzelnen Formrinnen 6 angeordneten biegsamen Zwischenelemente 7 gespannt sind.

Nach Figur 4b wird die Formfläche 8 nachfolgend mit einer Vakuumfolie 12 belegt, um diese abzudichten.

Gemäß Figur 4c wird die Formfläche 8 anschließend mit vorkonfektionierten Hilfsstoffbahnen 13 im Bereich zwischen benachbarten Formrinnen 6 belegt.

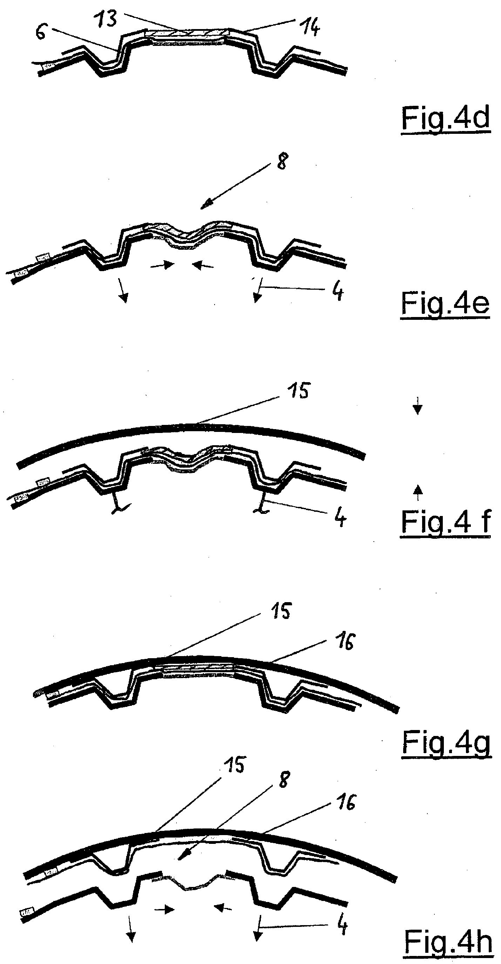

Nach Figur 4d werden anschließend in die Formrinnen 6 jeweils zugeordnete Stringer 14 aus kohlefaserverstärktem Kunststoff derart eingelegt, dass diese je nach Ausführung und Fertigungsverfahren randseitig gar nicht, teilweise oder vollständig mit den Hilfsstoffbahnen 13 überlappen.

Gemäß Figur 4e werden die Aktuatoren anschließend eingefahren, so dass sich auch die biegsamen Zwischenelemente 7 entspannen, um die Formfläche 8 in eine Einfahrstellung zu überführen.

Nach Figur 4f wird anschließend in dieser Einfahrstellung eine vollständig mit einer Haut und eventuell benötigten Druckblechen oder Hilfsstoffen belegten Aufrüstvorrichtung zugeordnete Laminier-Klebe-Vorrichtung 15 darüber oder darunter zugeführt und die Aktuatoren 4 werden anschließend wieder in eine Übergabestellung ausgefahren, um das Anpressen der belegten Formfläche 8 und damit der Stringer an einer korrespondierend hierzu geformten Gegenfläche der Laminier-Klebe-Vorrichtung mit Haut 15 zu bewirken.

Nachdem gemäß Figur 4g die Evakuierung seitens der Formfläche 8 gelöst ist, startet eine Evakuierung auf der gegenüberliegenden Gegenfläche seitens der Laminier-Klebe-Vorrichtung 15. Hierdurch werden die Stringer und die Hilfsstoffe durch den Atmosphärendruck an die LKV gedrückt und ist somit an die Laminier-Klebe-Vorrichtung 15 übergeben.

In dem in Figur 4h illustrierten letzten Verfahrensschritt werden die Aktuatoren 4 wieder eingefahren, um die Vorrichtung in die Einfahrstellung (Vermeidung von Hinterschnitten) zu überführen, damit die stark gekrümmte Rumpfschale 16 problemlos entformt werden kann.

Ferner ist es möglich, anstelle von pneumatischen Aktuatoren elektromotorisch betriebene Liniearantriebe oder Hydraulikzylinder zu verwenden.

## Patentansprüche

1. Vorrichtung zur Herstellung einer aus einem Faserverbundwerkstoff bestehenden Rumpfschale (16) für ein Luftfahrzeug, die zur Verstärkung mit mehreren beabstandet zueinander angeordneten Stringern (14) versehen ist, umfassend ein Grundgerüst (1) zur Bildung eines tragfähigen biegesteifen Unterbaus mit nach außen gewölbter Montagefläche (3) zum Positiv-Aufrüsten der herzustellenden Rumpfschale (16), wobei auf der Montagefläche (3) mehrere sich nach Radialaußen erstreckende längs verstellbare Aktuatoren (4) angebracht sind, die zur Montage über je zugeordnete Gelenke (5) schwenkbar auf der Montagefläche (3) des Grundgerüsts (1) befestigt sind und an den distalen Enden der Aktuatoren (4) Formrinnen (6) zur Aufnahme der Stringer (14) befestigt sind,
**dadurch gekennzeichnet, dass** die einzelnen Formrinnen (6) untereinander entlang ihrer Längskanten mit einem elastischen Band als biegsames Zwischenelement (7) zur Bildung einer vakuumdicht geschlossenen Formfläche (8, 8') verbunden sind, wobei jeder Aktuator (4) an seinem distalen Ende jeweils eine Formrinne (6) aufweist.

2. Vorrichtung zur Herstellung einer aus einem Faserverbundwerkstoff bestehenden Rumpfschale (16) für ein Luftfahrzeug, die zur Verstärkung mit mehreren beabstandet zueinander angeordneten Stringern (14) versehen ist, umfassend ein Grundgerüst (1) zur Bildung eines tragfähigen biegesteifen Unterbaus mit nach außen gewölbter Montagefläche (3) zum Positiv-Aufrüsten der herzustellenden Rumpfschale (16), wobei auf der Montagefläche (3) mehrere sich nach Radialaußen erstreckende längs verstellbare Aktuatoren (4) angebracht sind, die zur Montage über je zugeordnete Gelenke (5) schwenkbar auf der Montagefläche (3) des Grundgerüsts (1) befestigt sind und an den distalen Enden der Aktuatoren (4) Formrinnen (6) zur Aufnahme der Stringer (14) befestigt sind,
**dadurch gekennzeichnet, dass** mehrere benachbarte, starr miteinander verbundene Formrinnen (6a, 6b) entlang ihrer Längskanten mit einem Scharnier als Zwischenelement (7') zur Bildung einer vakuumdicht geschlossenen Formfläche (8, 8')an dem Grundgerüst (1) angelenkt sind, wobei mehrere miteinander starr verbundene Formrinnen (6a, 6b) über einen gemeinsamen Aktuator (4') verstellbar sind, wobei der Aktuator (4') zum Abklappen einer hierüber schwenkbaren Seitenflanke der Formfläche (8') vorgesehen ist.

3. Vorrichtung nach Anspruch 1 oder 2,
**dadurch gekennzeichnet, dass** die Formrinne (6) mit Nuten zur Vakuumführung und Vakuumanschlüssen (10) für die Formfläche (8) versehen ist.

4. Vorrichtung nach Anspruch 3,
**dadurch gekennzeichnet, dass** der Nutbereich der Formrinne (6) mehrere beabstandet zueinander angeordnete nutquerschnittsverringernde und der Sollgeometrie des einzulegenden Stringers (14) entsprechende Positionierabschnitte (11) aufweist.

5. Vorrichtung nach Anspruch 1 oder 2,
**dadurch gekennzeichnet, dass** das Grundgerüst (1) auf einem Verschiebewagen (9) mit Hubmechanismus oder einer Hub-Dreh-Vorrichtung zum Zusammenfahren von Laminier-Klebe-Vorrichtung (15) und Aufrüstvorrichtung und zur Positionierung der Vorrichtungen gegeneinander.

6. Verfahren zur Herstellung einer aus einem Faserverbundwerkstoff bestehenden Rumpfschale (16) für ein Luftfahrzeug mit einer Vorrichtung nach einem der vorstehenden Ansprüche,
**gekennzeichnet durch** die folgenden Verfahrensschritte:
a) Ausfahren der Aktuatoren (4) zur Bildung einer der Ausgangslage entsprechenden Formfläche (8) in Übergabestellung,
b) Aufziehen und Abdichten einer Vakuumfolie (12) auf die Formfläche (8) mit einem Vakuum,
c) Aufkleben vorkonfektionierter Hilfsstoffbahnen (13) in die Bereiche zwischen Kavitäten/Mulden benachbarter Formrinnen (6),
d) Einlegen von Stringern (14) in die Formrinnen (6), so dass diese parallel zu den Hilfsstoffbahnen (13) verlaufen,
e) Einfahren der Aktuatoren (4) zur Bildung einer Einfahrstellung zum beabstandeten Positionieren der belegten Formfläche (8) unterhalb oder oberhalb einer zugeordneten Laminier-Klebe-Vorrichtung (15),
f) Ausfahren der Aktuatoren (4) in die Übergabestellung zum Anpressen der belegten Formfläche (8) an eine korrespondierend hierzu geformten Gegenfläche der Laminier-Klebe-Vorrichtung (15),
g) Lösen des Vakuums seitens der Formfläche (8) und Starten eines Vakuums seitens der Laminier-Klebe-Vorrichtung (15) zum Übergeben des zuvor auf der Formfläche (8) aufgebrachten Aufbaus,
h) Einfahren der Aktuatoren (4) in die Einfahrstellung zum Auseinanderfahren von Aufrüstvorrichtung und Laminier-Klebe-Vorrichtung (15).

7. Verfahren nach Anspruch 6,
**dadurch gekennzeichnet, dass** nach dem Schritt d) ein Zwischenschritt d1) durchgeführt wird, nach dem mit Dichtmitteln versehene Endstücke in die Nutenden der Formrinnen (6) eingelegt werden.

8. Verfahren nach Anspruch 6,
**dadurch gekennzeichnet, dass** nach dem Schritt d) ein Zwischenschritt d2) quer über den Bereich benachbarter Nutenden der Formrinnen (6) eine Dichtmittelspur gelegt wird.

9. Verfahren nach Anspruch 6,
**dadurch gekennzeichnet, dass** nach dem Schritt h) in einem abschließenden Verfahrensschritt die Rumpfschale (16) entnommen wird und anschließend zur Qualitätsprüfung gewendet wird, so dass die mit den Stringern (14) verstärkte Innenseite visuellen Prüfungen zugänglich ist.

## Claims

1. A device for manufacturing a fiber-reinforced fuselage shell (16) for an aircraft, which fuselage shell (16) for the purpose of reinforcement comprises several stringers (14) that are spaced apart from each other, with the device comprising a base frame (1) for forming a load-bearing, rigid, substructure with an outwardly-curved mounting surface (3) for the positive-rigging of the fuselage shell (16) to be manufactured, wherein several actuators (4) that extend radially outwards and that are longitudinally adjustable are affixed to the mounting surface (3), for installation the actuators (4) are hingeably mounted by way of associated joints (5) on the mounting surface (3) of the base frame (1) and at the distal ends of the actuators (4) mold channels (6) for receiving the stringers (14) are attached,
**characterized in that** each of the mold channels (6) are interconnected to each other by an elastic belt as means of flexible intermediate elements (7) for forming a vacuum-tight closed mold surface (8, 8'), wherein each actuator (4) has a mold channel (6) at his distal end.

2. A device for manufacturing a fiber-reinforced fuselage shell (16) for an aircraft, which fuselage shell (16) for the purpose of reinforcement comprises several stringers (14) that are spaced apart from each other, with the device comprising a base frame (1) for forming a load-bearing, rigid, substructure with an outwardly-curved mounting surface (3) for the positive-rigging of the fuselage shell (16) to be manufactured, wherein several actuators (4) that extend radially outwards and that are longitudinally adjustable are affixed to the mounting surface (3), for installation the actuators (4) are hingeably mounted by way of associated joints (5) on the mounting surface (3) of the base frame (1) and at the distal ends of the actuators (4) mold channels (6) for receiving the stringers (14) are attached,
**characterized in that** several adjacent, rigidly interconnected mold channels (6a, 6b) along their longitudinal edges are interconnected to each other by a hinge as means of flexible intermediate elements (7) for forming a vacuum-tight closed mold surface (8, 8'), wherein several rigidly interconnected mold channels (6a, 6b) are adjustable via a common actuator (4'), wherein the actuator (4') is provided for folding down a pivoted side flank of the mold surface (8').

3. The device of claim 1 or 2,
**characterized in that** the mold channel (6) comprises grooves for guiding the vacuum and vacuum connections (10) for the mold surface (8).

4. The device of claim 3,
**characterized in that** the groove region of the mold channel (6) comprises several positioning sections (11) that are arranged so as to be spaced apart from each other, that reduce the diameter of the groove cross section, and that correspond to the desired geometry of the stringer (14) to be inserted.

5. The device of claim 1 or 2,
**characterized in that** the base frame (1) is moved on a transfer carriage (9) with a lifting mechanism or a lifting-rotating device for moving together the laminating-bonding device (15) and the rigging device, and for positioning the devices relative to each other.

6. A method for manufacturing a fuselage shell (16) comprising a fiber-reinforced composite material for an aircraft with a device of any one of the preceding claims, **characterized by** the following method-related steps:
a) extending the actuators (4) to the transfer position in order to form a mold surface (8) that corresponds to the initial position,
b) drawing and sealing a vacuum foil (12) onto the mold surface (8) with a vacuum,
c) bonding auxiliary material panels (13) into the regions between cavities/depressions of adjacent mold channels (6),
d) inserting stringers (14) into the mold channels (6) so that they extend parallel to the auxiliary material panels (13),
e) retracting the actuators (4) in order to form a retracted position for the spaced-apart positioning of the occupied mold surface (8) beneath or above an associated laminating-bonding device (15),
f) extending the actuators (4) to the transfer position for pressing the occupied mold surface (8) against a correspondingly formed counter-surface of the laminating-bonding device (15),
g) undoing the evacuation on the side of the mold surface (8) and starting the evacuation on the side of the laminating-bonding device (15) for transferring the construction previously placed onto the mold surface (8),
h) retracting the actuators (4) into the retracted position for moving apart the rigging device and the laminating-bonding device (15).

7. The method of claim 6,
**characterized in that** after step d) an intermediate step d1) is carried out according to which intermediate step d1) end pieces comprising sealant are inserted into the groove ends of the mold channels (6).

8. The method of claim 6,
**characterized in that** after step d) an intermediate step d2) is carried out according to which a trace of sealant is placed transversely over the region of adjacent groove ends of the mold channels (6).

9. The method of claim 6,
**characterized in that** after step h) in a final method-related step the fuselage shell (16) is removed, and subsequently for quality control is rotated so that the inside that is reinforced with the stringers (14) is accessible for visual checking.

## Revendications

1. Dispositif de fabrication d'une coque de fuselage (16) constituée d'un matériau composite renforcé par des fibres pour un aéronef, cette coque étant pourvue, en vue du renforcement, de plusieurs lisses (14) disposées à distance les unes des autres, comprenant une ossature de base (1) destinée à former une base porteuse résistante à la flexion comportant une surface de montage (3) bombée vers l'extérieur en vue d'un équipement positif de la coque de fuselage (16) à fabriquer, dans lequel sont montés, sur la surface de montage (3), plusieurs actionneurs (4) mobiles longitudinalement s'étendant radialement vers l'extérieur qui sont fixés pivotants pour le montage par l'intermédiaire d'articulations (5) respectivement associées sur la surface de montage (3) de l'ossature de base (1) et dans lequel des rigoles de formage (6) destinées à recevoir la lisse (14) sont fixées aux extrémités distales des actionneurs (4),
**caractérisé en ce que** les différentes rigoles de formage (6) sont reliées les unes aux autres le long de leurs arêtes longitudinales avec un ruban élastique en tant qu'élément intermédiaire (7) flexible pour former une surface de formage (8, 8') étanche au vide, chaque actionneur (4) présentant à son extrémité distale respectivement une rigole de formage (6).

2. Dispositif de fabrication d'une coque de fuselage (16) constituée d'un matériau composite renforcé par des fibres pour un aéronef, cette coque étant pourvue, en vue du renforcement, de plusieurs lisses (14) disposées à distance les unes des autres, comprenant une ossature de base (1) destinée à former une base porteuse résistante à la flexion comportant une surface de montage (3) bombée vers l'extérieur en vue d'un équipement positif de la coque de fuselage (16) à fabriquer, dans lequel sont montés, sur la surface de montage (3), plusieurs actionneurs (4) mobiles longitudinalement s'étendant radialement vers l'extérieur qui sont fixés pivotants pour le montage par l'intermédiaire d'articulations (5) respectivement associées sur la surface de montage (3) de l'ossature de base (1) et dans lequel des rigoles de formage (6) destinées à recevoir la lisse (14) sont fixées aux extrémités distales des actionneurs (4), **caractérisé en ce que** plusieurs rigoles de formage (6a, 6b) adjacentes reliées de manière rigide entre elles sont articulées au niveau de l'ossature de base le long de leurs arêtes longitudinales avec une charnière en tant qu'élément intermédiaire (7') pour former une surface de formage (8, 8') étanche au vide (1), plusieurs rigoles de formage (6a, 6b) reliées de manière rigide entre elles étant réglables par l'intermédiaire d'un actionneur (4') commun, l'actionneur (4') étant prévu pour rabattre par ce moyen un flanc latéral de la surface de formage (8').

3. Dispositif selon la revendication 1 ou 2, **caractérisé en ce que** la rigole de formage (6) est pourvue de rainures pour guider le vide et de prises de vide (10) pour la surface de formage (8).

4. Dispositif selon la revendication 3,
**caractérisé en ce que** la zone de rainure de la rigole de formage (6) présente plusieurs sections de positionnement (11) réduisant la section transversale de rainure disposées à distance entre elles et correspondant à la géométrie théorique de la lisse (14) à insérer.

5. Dispositif selon la revendication 1 ou 2,
**caractérisé en ce que** l'ossature de base (1) est montée sur un chariot (9) comportant un mécanisme de levage ou un dispositif d'élévation-rotation pour rapprocher le dispositif de laminage et de collage (15) et le dispositif d'équipement et pour positionner les dispositifs l'un contre l'autre.

6. Procédé pour fabriquer une coque de fuselage (16) d'un aéronef constituée d'un matériau composite renforcé par des fibres avec un dispositif selon l'une des revendications,
**caractérisé par** les étapes de procédé suivantes :
a) déploiement des actionneurs (4) pour former une surface de formage (8) correspondant à la position de départ en position de transfert,
b) pose et étanchéification d'un film sous vide (12) sur la surface de formage (8) sous vide,
c) collage de rubans d'agents auxiliaires (13) préconfectionnés dans les zones entre cavités/cuvettes de rigoles de formage (6) adjacentes,
d) insertion de lisses (14) dans les rigoles de formage (6), de telle sorte que celles-ci s'étendent parallèlement aux rubans d'agents auxiliaires (13),
e) escamotage des actionneurs (4) pour former une position escamotée pour positionner à distance la surface de formage (8) garnie en dessous et au-dessus d'un dispositif de laminage et de collage (15),
f) déploiement des actionneurs (4) dans la position de transfert pour presser la surface de formage (8) garnie contre une contre-surface de forme correspondante du dispositif de laminage et de collage (15),
g) libération du vide côté surface de formage (8) et démarrage d'un vide côté dispositif de laminage et de collage (15) pour transférer la structure préalablement appliquée sur la surface de formage (8),
h) escamotage des actionneurs (4) en position escamotée pour séparer le dispositif d'équipement et le dispositif de laminage et de collage (15).

7. Procédé selon la revendication 6,
**caractérisé en ce que**, après l'étape d), une étape intermédiaire d1) est réalisée, selon laquelle des embouts dotés de moyens d'étanchéité sont insérés dans les extrémités de la rainure des rigoles de formage (6).

8. Procédé selon la revendication 6,
**caractérisé en ce que**, après l'étape d), une étape intermédiaire d2) est réalisée, selon laquelle une bande de moyen d'étanchéité est posée dans le sens transversal de la zone d'embouts adjacents des rigoles de formage (6).

9. Procédé selon la revendication 6, **caractérisé en ce que**, après l'étape h), la coque de fuselage (16) est retirée dans une étape finale du processus puis tournée en vue du contrôle de la qualité, de telle sorte que la face intérieure renforcée par les lisses (14) est accessible pour des contrôles visuels.
